# EUROPEAN PATENT SPECIFICATION

(11) **EP 4 301 648 B1**
(45) Date of publication and mention of the grant of the patent: **16.04.2025**
(21) Application number: 22712898.0
(22) Date of filing: 01.03.2022
(51) Int. Cl.: B61L 15/00, B61L 27/53, B61L 27/57, G05B 23/02

(54) **DEVICE AND METHOD FOR RAIL SYSTEM DEVICE MAINTENANCE PLANNING**
VORRICHTUNG UND VERFAHREN ZUR WARTUNGSPLANUNG VON SCHIENENSYSTEMVORRICHTUNGEN
DISPOSITIF ET PROCÉDÉ DE PLANIFICATION DE LA MAINTENANCE D'UN DISPOSITIF DE SYSTÈME FERROVIAIRE

(30) Priority: 01.03.2021 CH 2212021
(43) Date of publication of application: 10.01.2024
(73) Proprietor: Schweizerische Bundesbahnen SBB, 3000 Bern 65 (CH)
(72) Inventor: GEHRIG, Urs, 4054 Basel (CH)
(74) Representative: Rentsch Partner AG
(86) International application number: PCT/EP2022/055161
(87) International publication number: WO 2022/184719

(56) References cited:
- US-A1- 2020 012 670
- US-A1- 2020 272 112
- KIM JAEHOON ET AL: "Evaluation of the adequacy of maintenance tasks using the failure consequences of railroad vehicles", RELIABILITY ENGINEERING AND SYSTEM SAFETY, ELSEVIER APPLIED SCIENCE, GB, vol. 117, 13 April 2013 (2013-04-13), pages 30 - 39, XP028551057, ISSN: 0951-8320, DOI: 10.1016/J.RESS.2013.03.008

## Description

### FIELD OF THE DISCLOSURE

The present invention relates to a device and method for rail system device maintenance planning.

### BACKGROUND OF THE DISCLOSURE

Rail systems are highly complex systems comprising rolling stock and infrastructure that are subject to harsh operating and environmental conditions. The rolling stock includes trainsets, shunting locomotives, and railcars, for example. The infrastructure includes the physical rail track, switches, overhead lines, as well as the power electronics (e.g., transformers and back-up generators). Each of the aforementioned examples of rolling stock and infrastructure include various sub-systems, devices, and components thereof.

To ensure safe and efficient operation, regular inspections and maintenance of devices of the rail systems is required. Additionally, any malfunctioning or improperly functioning device of the rail system that is noticed by rail personnel is reported. On the basis of such reports alone, however, it can be difficult to ascertain the correct manner of proceeding, in particular because it may be unclear, due to the highly complex nature of rail systems and their components, what the underlying cause of the malfunctioning or improperly functioning device is. Additionally, it can be difficult to correctly plan and/or prioritize maintenance of the device because it may be unclear what effect the malfunctioning or improperly functioning part has on the safe and reliable execution of rail services. For example, a safety-critical device which does not function properly may have to undergo maintenance immediately, while another non-safety-critical device may have maintenance planned for a next routine stop at a rail maintenance facility.

US2020272112A1 discloses a system and method for training and validating models in a machine learning pipeline for failure mode analytics. The machine learning pipeline may include an unsupervised training phase, a validation phase and a supervised training and scoring phase. In one example, the method may include receiving a request to create a machine learning model for failure mode detection associated with an asset, retrieving historical notification data of the asset, generating an unsupervised machine learning model via unsupervised learning on the historical notification data, wherein the unsupervised learning comprises identifying failure topics from text included in the historical notification data and mapping the identified failure topics to a plurality of predefined failure modes for the asset, and storing the generated unsupervised machine learning model via a storage device.

Kim Jaehoon et al, ("Evaluation of the adequacy of maintenance tasks using the failure consequences of railroad vehicles", 2013-04-13), is a study concerned with the improvement of the efficiency, reliability and safety related to railroad maintenance tasks through an evaluation of the consequences of failures. The brake system was selected based on the failure data obtained from railroad vehicles in operation as one of the safety systems in railroad vehicles.

### SUMMARY OF THE DISCLOSURE

It is an object of the invention and embodiments disclosed herein to provide a method for maintenance planning of a rail system device and computer for maintenance planning of a rail system device.

In particular, it is an object of the invention and embodiments disclosed herein to provide a method for maintenance planning of a rail system device, in particular a rolling stock device or a railway infrastructure device, and computer for maintenance planning of a rail system device which does not have at least some of the disadvantages of the prior art.

The present disclosure relates to a method for maintenance planning of a rail system device, in particular a rolling stock device or a railway infrastructure device. The method comprises receiving, in a processor, a fault report message relating to a malfunctioning rail system device. The method comprises analyzing, in the processor, the fault report message using natural language processing. The method comprises mapping, in the processor, the analyzed fault report message to a particular failure mode type of a plurality of failure mode types associated with the rail system device, the particular failure mode type identifying at least one probable cause of malfunction of the rail system device related to the fault report message. The method comprises determining, in the processor, using the particular failure mode type, a failure effect associated with the particular failure mode type, wherein the failure effect identifies one or more operational consequences of the failure mode type. The method comprises determining, in the processor, a time and/or a distance until maintenance of the rail system device, using the failure effect.

The term rail system device is not to be understood as a device limited to the railway line system (such as tracks and switches) but to be understood as any device used in direct relation with rail transportation, including rolling stock or railway infrastructure. The term rail system device can therefore be a rail traffic system device, a rail transport system device, or component thereof.

In an embodiment, the method further comprises generating, in the processor, a maintenance planning message indicating the time and/or the distance until maintenance.

In an embodiment, the method further comprises performing maintenance of the rail system device according to maintenance measures, wherein the maintenance measures are determined using the fault report message, the failure mode type, and/or the failure effect. The maintenance measures can include repair or replacement of the rail system device or a component thereof.

In an embodiment, determining the failure effect using the particular failure mode type comprises using a failure-mode-and-effects model which associates the particular failure mode type with the failure effect.

In an embodiment, the failure-mode-and-effects model for the rail system device is established using a historical dataset comprising the plurality of failure mode types of the rail system device and therewith associated failure effects, and/or by processing technical device information related to the rail system device from external information sources.

In an embodiment, processing the technical device information from external information sources comprises aggregating, in the processor, from a plurality of external information sources, the technical device information related to the rail system device, wherein the external information sources including scientific literature, patent publications, and/or technical manuals. Processing the technical information comprises extracting, in the processor, from the plurality of external information sources, functional elements and/or structural elements of the rail system device. Processing the technical information comprises determining, in the processor, using the functional elements and/or structural elements, one or more failure mode types and one or more failure effects of the rail system device.

In an embodiment, mapping the analyzed fault report message to one of a plurality of failure mode types uses a statistical topic model trained using a topic model training dataset and an unsupervised machine learning technique, wherein the topic model training dataset comprises a plurality of historical fault report messages.

In an embodiment, the natural language processing for analyzing the fault report message uses Named Entity Recognition.

In addition to a method for maintenance planning of a rail system device, the present disclosure also relates to a rail system maintenance planning device for maintenance planning of a rail system device, in particular a rolling stock device or an infrastructure device, comprising a processor configured to receive a fault report message relating to a malfunctioning rail system device. The processor is configured to analyze the fault report message using natural language processing. The processor is configured to map the analyzed fault report message to a particular failure mode type of a plurality of failure mode types associated with the rail system device. The particular failure mode type identifies at least one probable cause of malfunction of the rail system device related to the fault report message. The processor is configured to determine, using the particular failure mode type, a failure effect associated with the particular failure mode type, using the particular failure mode types, wherein the failure effect identifies one or more operational consequences of the particular failure mode type. The processor is configured to determine a time and/or a distance until maintenance of the rail system device, using the failure effect.

In an embodiment, the processor of the rail system maintenance planning device is further configured to generate a maintenance planning message indicating the time and/or the distance until maintenance.

In an embodiment, the processor of the rail system maintenance planning device is configured to determine the failure effect using a failure-mode-and-effects model which associates the particular failure mode type with the failure effect.

In an embodiment, the failure-mode-and-effects model used by the processor for the rail system device is established using a historical dataset comprising the plurality of failure mode types of the rail system device and therewith associated failure effects, and/or by processing technical device information related to the rail system device from external information sources.

In an embodiment, the processor is configured to process the technical device information from external information sources by aggregating, from a plurality of external information sources the technical device information related to the rail system device. The external information sources include scientific literature, patent publications, and/or technical manuals. The processor is configured to extract, from the plurality of external information sources, functional elements and/or structural elements of the rail system device. The processor is configured to determine, using the functional elements and/or structural elements, one or more failure mode types and one or more failure effects of the rail system device.

In an embodiment, the processor is configured to map the analyzed fault report message to one of a plurality of failure mode types using a statistical topic model trained using a topic model training dataset and an unsupervised machine learning technique, wherein the topic model training dataset comprises a plurality of historical fault report messages.

In addition to a method for maintenance planning of a rail system device and a rail system maintenance planning device, the present disclosure also relates to a computer program product comprising a non-transitory computer-readable medium having stored thereon computer program code configured to control a processor, in particular of a rail system maintenance planning device, such that the processor performs the step of receiving a fault report message relating to a malfunctioning rail system device. The computer program code is configured to control the processor to perform the step of analyzing the fault report message using natural language processing. The computer program code is configured to control the processor to perform the step of mapping the analyzed fault report message to a particular failure mode type of a plurality of failure mode types associated with the rail system device, the particular failure mode type identifying at least one probable cause of malfunction of the rail system device related to the fault report message. The computer program code is configured to control the processor to perform the step of determining, using the particular failure mode type, a failure effect associated with the particular failure mode type, wherein the failure effect identifies one or more operational consequences of the particular failure mode type. The computer program code is configured to control the processor to perform the step of determining one or more of: a time or a distance until maintenance of the rail system device, using the failure effect.

In addition to the method for maintenance planning of a rail system device, a rail system maintenance planning device, and a computer program product, the present disclosure also relates to a maintenance system comprising the rail system maintenance planning device as described herein and a maintenance facility, wherein the maintenance facility is configured to perform maintenance on the rail system device according to determined maintenance measures. In particular, the maintenance facility comprises a computing device configured to receive a maintenance planning message comprising the maintenance measures.

The present disclosure relates in particular to maintenance planning of a rail system device, however maintenance planning of other types of devices is also foreseen. In particular, maintenance planning of a tram system device (e.g., a tram), trolley-bus system device (e.g., a trolley bus) shall be included, as well, and be covered by the appended claims.

Furthermore, the present disclosure also relates to a method or device or computer program product for maintenance planning of other vehicles, in particular a bus or industrial vehicles, such as logistics machinery (e.g., a truck, a forklift), construction machinery (e.g., cranes, diggers, cement mixers), agricultural machinery (e.g., tractors, harvesters), or mining machinery, is foreseen. Additionally, maintenance planning of other types of vehicles, including boats, can be included. Such applications are herewith disclosed, and they can profit from the embodiments disclosed herein in the context of rail traffic systems.

### BRIEF DESCRIPTION OF THE DRAWINGS

The herein described disclosure will be more fully understood from the detailed description given herein below and the accompanying drawings which should not be considered limiting to the invention described in the appended claims. The drawings in which:
- Fig. 1: shows a block diagram illustrating schematically a rail system maintenance planning device;
- Fig. 2: shows a flow diagram illustrating an exemplary sequence of steps performed by the rail system maintenance planning device;
- Fig. 3: shows a flow diagram illustrating an exemplary sequence of steps performed by the rail system maintenance planning device;
- Fig. 4: shows a block diagram illustrating schematically a failure-mode-and-effects model;
- Fig. 5: shows a flow diagram illustrating an exemplary sequence of steps for training a failure-mode-and-effects model;
- Fig. 6: shows a flow diagram illustrating an exemplary sequence of steps for processing technical device information of a rail system device;
- Fig. 7: shows a block diagram illustrating schematically a maintenance facility of a rail system device;
- Fig. 8: shows a flow diagram illustrating an exemplary sequence of steps for processing a maintenance request;
- Fig. 9a: shows a block diagram illustrating schematically some examples of rail system devices; and
- Fig. 9b: shows a block diagram illustrating schematically some examples of rail system devices.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

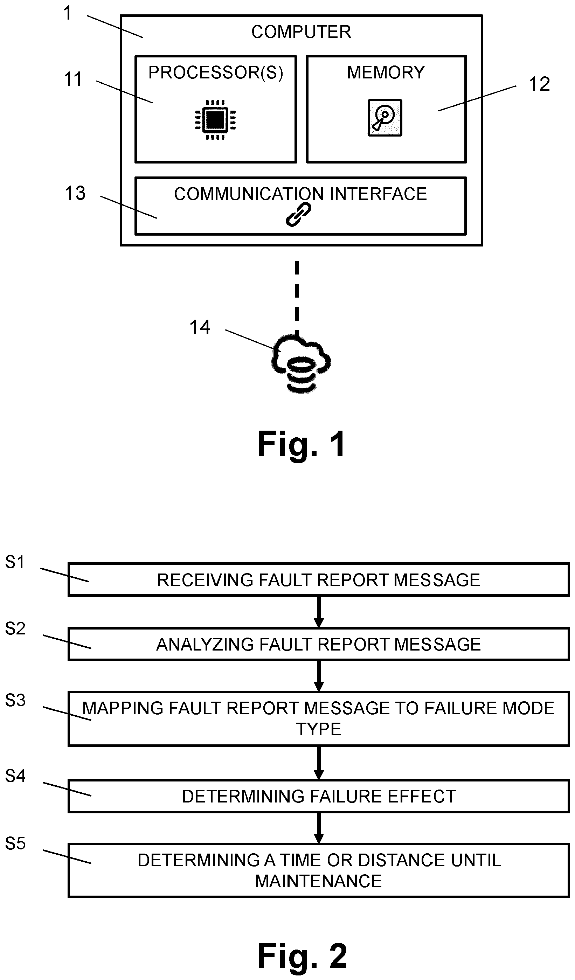

**Figure 1** shows a block diagram illustrating schematically a rail system maintenance planning device 1 for maintenance planning of a rail system device. The rail system maintenance planning device 1 comprises an electronic circuit, including a processor 11, a memory 12, and a communication interface 13. Depending on the embodiment, the rail system maintenance planning device 1 can have a human-machine interface (HMI), comprising output means and/or input means. The output means can comprise a display (touch or non-touch) and/or a loudspeaker. The input means can comprise a touch interface, keyboard, mouse, pen, etc. The rail system maintenance planning device 1 can be embodied as a laptop computer, a desktop computer, a server computer, and/or a computer system comprising several connected computers. In an embodiment, the rail system maintenance planning device 1 is connected to a cloud-based computing system 14 which provides computing resources, including processing and storage capabilities, to the rail system maintenance planning device 1. In an embodiment, the rail system maintenance planning device 1 is itself implemented on a cloud-based computing system.

The person skilled in the art is aware that some or all of the functionality described in relation to the rail system maintenance planning device 1 can be, depending on the embodiment, provided by the cloud-based computing system 14. The cloud-based computing system 14 is particularly well suited for providing a large memory for storing data, for example in a database.

The processor 11 comprises a central processing unit (CPU) for executing computer program code stored in the memory. The processor 11, in an example, can include more specific processing units such as application specific integrated circuits (ASICs), reprogrammable processing units such as field programmable gate arrays (FPGAs), or processing units specifically configured to accelerate certain applications. The memory 12 can comprise one or more volatile (transitory) and or non-volatile (non-transitory) storage components. The storage components can be removable and/or non-removable, and can also be integrated, in whole or in part with the rail system maintenance planning device 1. Examples of storage components include RAM (Random Access Memory), flash memory, hard disks, data memory, and/or other data stores. Depending on the embodiment, the memory 12 comprises a database, which database may be implemented locally on the rail system maintenance planning device 1 itself or remotely, for example on the cloud-based computer system 14. The memory 12 has stored thereon computer program code configured to control the processor 11 of the rail system maintenance planning device 1, such that the rail system maintenance planning device 1, performs one or more method steps and/or functions as described herein. Depending on the embodiment, the computer program code is compiled or non-compiled program logic and/or machine code. As such, the rail system maintenance planning device 1 is configured to perform one or more method steps and/or functions. The computer program code defines and/or is part of a discrete software application. One skilled in the art will understand, that the computer program code can also be distributed across a plurality of software applications, which software applications can be distributed and executed on a plurality of devices which together form the rail system maintenance planning device 1. The software application is installed in the rail system maintenance planning device 1. Alternatively, the computer program code can also be retrieved and executed by the rail system maintenance planning device 1 on demand. In an embodiment, the computer program code further provides interfaces, such as APIs (Application Programming Interfaces), such that functionality and/or data of the rail system maintenance planning device 1 can be accessed remotely, such as via a client application or via a web browser. In an embodiment, the computer program code is configured such that one or more method steps and/or functions are not performed in the rail system maintenance planning device 1, but in an external computing system or computing device, for example a mobile phone, and/or a remote server at a different location to the computer 1, such as in the cloud-based computing system 14.

The various components of the rail system maintenance planning device 1 are interconnected using connection lines. The term connection line relates to means which facilitate power transmission and/or data communication between two or more modules, devices, systems, sub-systems, or other entities. A given connection line can comprise a wired connection, for example using a cable or system bus, or comprise a wireless connection using direct or indirect wireless transmissions.

Furthermore, the rail system maintenance planning device 1 is connected to one or more networks, including local networks such as a local area network, and other networks, such as the Internet, using a communication interface 13. The communication interface 13 is configured to facilitate wired and/or wireless data transmission between the rail system maintenance planning device 1 and one or more further devices and/or computer systems, in particular the cloud-based computing system 14, either directly or via an intermediary network. In particular, the communication interface 13 is configured to receive a fault report message.

**Figure 2** shows a flow diagram illustrating an exemplary sequence of steps for maintenance planning of a rail system device. The steps are described as being performed by the processor 11 of the rail system maintenance planning device 1, however at least some of the steps can be carried out on other devices, for example the cloud-based computing system 14.

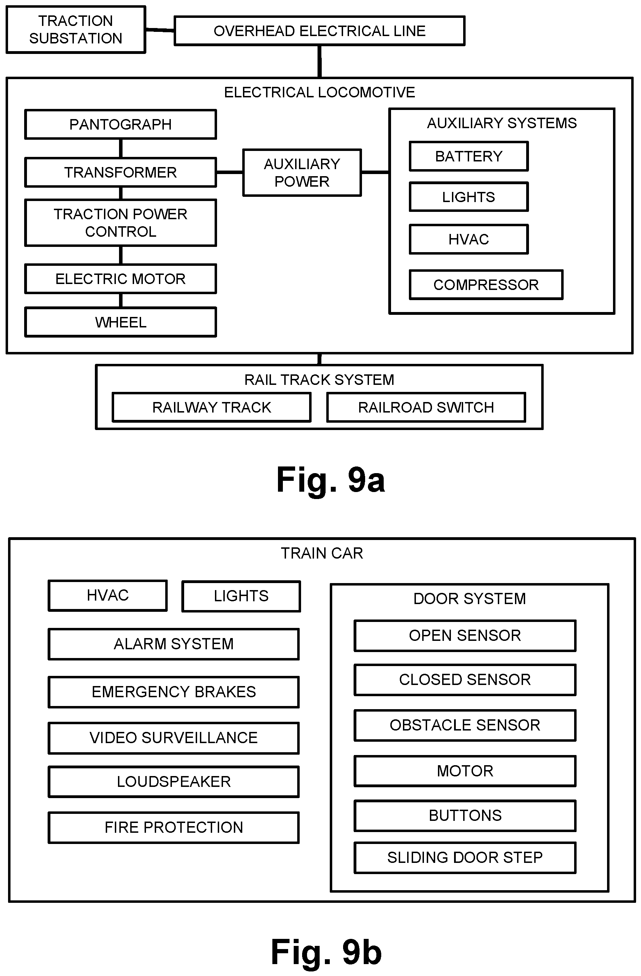

In a step S1, a fault report message is received in the processor 11 via the communication interface 13. The fault report message relates to a malfunctioning rail system device (examples of such rail system devices are described with reference to **Figures 9a** and **9b**).

In an embodiment, the fault report message comprises a human-written text describing a fault of the rail system device. The fault report message, in particular the human-written text, or recorded human speech, is preferably entered into a mobile communication device used by the railway technician and transmitted by the mobile communication device to the rail system maintenance planning device 1.

In an example, a railway technician, noting that a door of a train car does not open anymore, submits a fault report message indicating that the door does not close properly. In another example, a railway technician, noting that the sliding door step does not retract fully anymore, submits a fault report message indicating that the sliding door step does not retract fully anymore. Additionally, the railway technician may note suspected causes of the malfunction and/or efforts to remedy the malfunction, for example by noting that the sliding door step was jammed by a rock and noting that the rock was successfully removed.

In an embodiment, the fault report message is generated by a monitoring system configured to monitor the rail system device. The monitoring system transmits the fault report message to the rail system maintenance planning device 1.

The fault report message may further comprise information identifying the particular rail system device (e.g., an identifier of the door and/or the particular train car), circumstances relating to the malfunction, conjectures about causes of the malfunction, and/or indications that the malfunction has been fixed. Additionally, the fault report message can comprise a time-stamp and/or location information related to the timepoint and/or the geographic location, respectively, when the fault report message was created.

In a step S2, the processor 11 analyzes the fault report message. The fault report message is analyzed using natural language processing. Natural language processing comprises, for example, morphological analysis, syntactic analysis, relational semantics, and lexical semantics. In particular, Named Entity Recognition is used to identify the rail system device, a super-system comprising the rail system device, and/or components of the rail system device. The natural language processing is implemented, for example, as a recurrent neural network (RNN) configured to take as an input the fault report message.

The fault report message is analyzed and results in an analyzed fault report message. The analyzed fault report message comprises an output of the natural language processing (e.g., an output of the neural network), and may take a number of forms, including a list of keywords extracted from the fault report message, an identified rail system device, etc. Depending on the embodiment, the analyzed fault report message comprises vectors, matrices, or other data types not directly relating to text.

Step S2 may be adapted or be integrated in Step S1, in some embodiments, in particular when the fault report message is generated automatically by the monitoring system and not by the railway technician and is thus present in an already analyzed form. This variant shall be covered by the appended claims.

In a step S3, the processor 11 maps the analyzed fault report message to a particular failure mode type 31 of a plurality of failure mode types 31 associated with the rail system device. The particular failure mode type 31 identifies at least one probable cause of malfunction of the rail system device. For example, the failure mode type 31 related to the malfunction of a door of a train car can be that a door sensor, which senses whether or not the door is closed, has malfunctioned. In another example, the failure mode type 31 may relate to the presence of a rock interfering with the retraction of the sliding door step.

The mapping S3 can take place, for example, by using a distance function to generate a distance between the analyzed fault report message and each of the plurality of failure mode types 31, and then to identify a closest failure mode type 31. The distance function may generate the distance in a number of ways, for example by considering a number of matching keywords (or abstractions thereof) between the analyzed fault report message and one or more keywords associated with the failure mode type 31.

In an embodiment, the mapping S3 is performed in a more abstract manner, wherein the analyzed fault report message is represented as a vector in a vector space and compared with a plurality of failure mode type vectors each associated with a particular failure mode type 31, selecting the failure mode type 31 having a most similar vector. In this embodiment, similarity may be expressed by providing scalar products of normalized vectors, and the most similar vector can be identified as the one having the largest scalar product with a given failure mode type vector.

In an embodiment, mapping S3 the analyzed fault report message to one of a plurality of failure mode types 31 uses a statistical topic model trained using a topic model training dataset and machine learning (e.g., unsupervised machine learning), wherein the topic model training dataset comprises a plurality of historical fault report messages. The machine learning technique uses, for example, latent dirichlet allocation (LDA). The topic model training dataset can also comprise external data sources as explained herein. The statistical topic model training can further comprise preprocessing the topic model training dataset, in particular by cleaning the data and vectorising the data in order to filter common and/or rare words.

In a step S4, the processor 11 is configured to determine a failure effect 32 associated with the particular failure mode type 31, using the particular failure mode type 31. The failure effect 32 identifies one or more operational consequences of the particular failure mode type 31. For example, an operational consequence of the door failing to open is that passengers can no longer enter or exit the train car using that particular door, and that longer allowances must be made for passengers to enter and/or exit the train during stops. In another example, an operational consequence of the sliding door step failing to retract fully may be relatively minor, and depending on whether the railway technician was able to remedy the malfunction, there may be no immediate operational consequences. The operational consequences, in case of more severe malfunction of a critical rail system device, may result in the rail system device having to undergo immediate maintenance (e.g., repair or replacement).

Determining the failure effect 32 may further comprise using the analyzed fault report message. In particular, the analyzed fault report message may comprise an indication as to whether the malfunction was able to be fixed.

In a step S5, the processor 11 determines a time and/or a distance until maintenance of the rail system device. The time and/or distance until maintenance can be determined using the failure effect determined in step S4, and can also be determined using the failure report message and/or the failure mode type 31. More severe failure effects typically result in a shorter time and/or distance until maintenance. For example, a train car door that does not close has the failure effect of (relating to the operational consequence of the train door not closing) that the train cannot continue its course until the malfunctioning train car door has been fixed, or at least closed and locked such as to ensure passenger safety. Therefore, immediate maintenance is necessary and the time and/or distance until maintenance indicate this. If the failure effect is very minor, or if the malfunction of the rail system device has already been remedied by the railway technician, then the time and/or distance until maintenance reflect this, for example by indicating a time and/or distance until a regular, previously scheduled maintenance, when the fix of the railway technician can be inspected. In another example, for example relating to a malfunctioning toilet, the time and/or distance until maintenance may be determined to reflect the end of an operational shift or an otherwise previously scheduled maintenance.

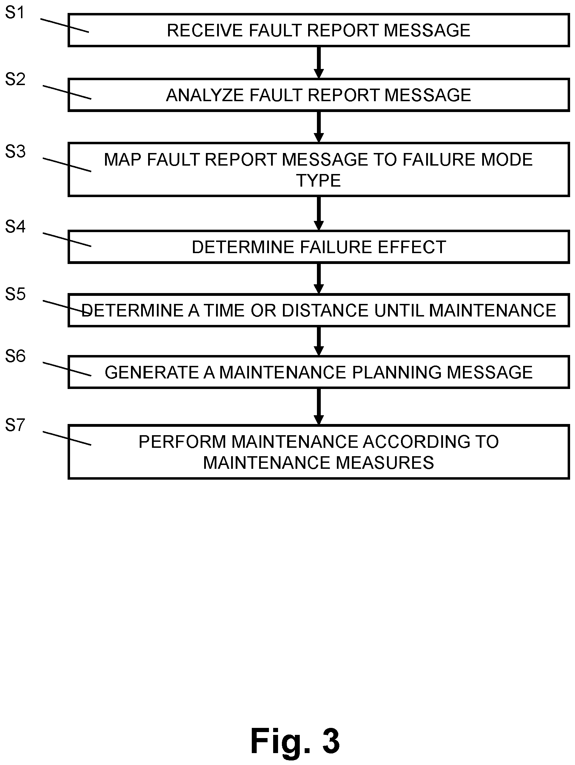

**Figure 3** shows a flow diagram illustrating an exemplary sequence of steps for carrying out the invention, steps S1 to S5 having been described above with reference to **Figure 2****.** In a step S6, the processor 11 generates a maintenance planning message indicating the time and/or distance until maintenance. The maintenance planning message is preferably transmitted, using the communication interface 13, to a maintenance scheduling system, in particular a maintenance scheduling database.

The maintenance planning message further comprises, depending on the embodiment, an identifier of the rail system device, the fault report message, the failure effect, and/or maintenance measures indicating how the malfunction of the rail system device is to be remedied. For example, the maintenance measures indicate replacement parts, maintenance procedures, equipment, and/or technical expertise required to perform the maintenance of the rail system device.

The maintenance measures can further indicate a time required to perform the maintenance. The maintenance measures thereby indicate precisely how the maintenance is to be undertaken for the rail system device, greatly increasing the efficiency of maintenance.

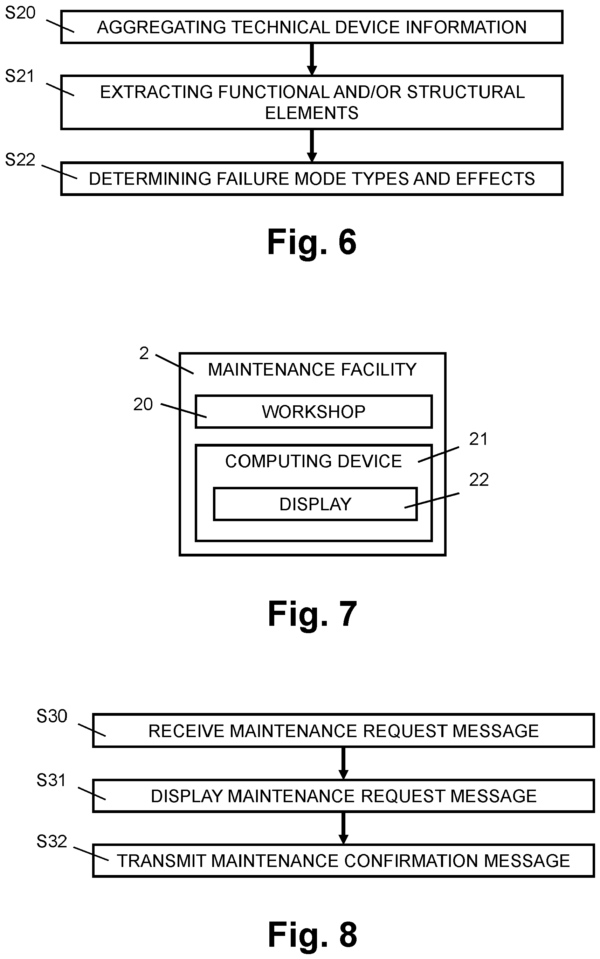

In a step S7, maintenance is performed according to the maintenance measures. In particular, maintenance is performed on the malfunctioning rail system device at a maintenance facility 2 (described in more detail with reference to **Figure 7****),** according to the maintenance measures received as part of the maintenance planning message.

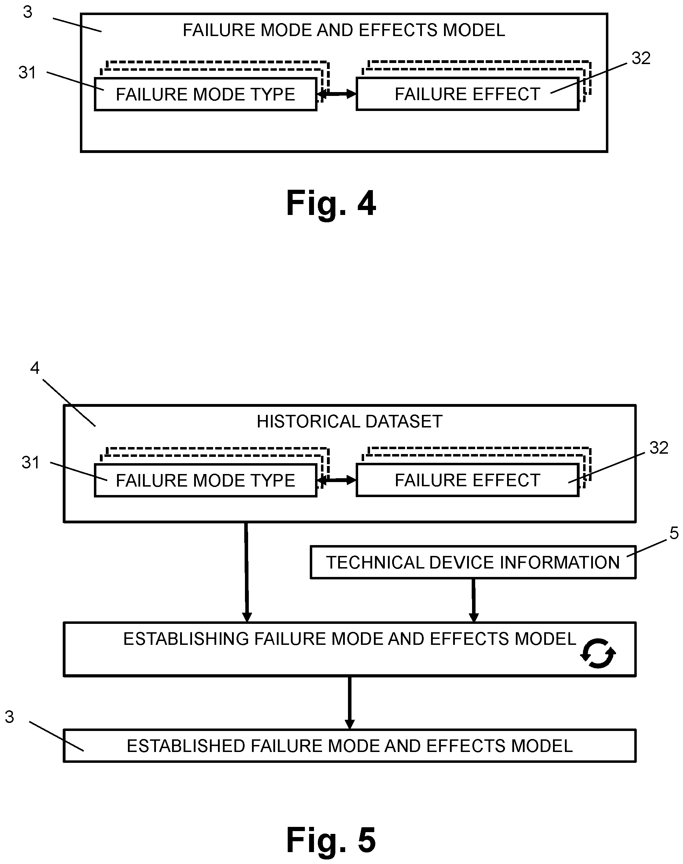

**Figure 4** shows a block diagram illustrating a failure-mode-and-effects (FME) model 3. The FME model 3 is a computerized model implemented on the rail system maintenance device 1. The FME model 3 can alternatively be implemented on the cloud-based server computer 14, with appropriate requests and responses between the rail system maintenance device 1 and the cloud-based server computer 14 facilitating use of the FME model for the rail system maintenance device. The FME model 3 can be implemented, for example, as one or more databases.

The FME model 3 associates, for a plurality of different rail system devices, failure mode types 31 with failure effects 32 associated with each particular rail system device. A given failure mode type 31 of a particular rail system device may be associated with one or more failure effects 32. As explained above, the failure mode type 31 relates to a cause of malfunction of the rail system device and the failure effect 32 relates to an operational consequence of the malfunction of the rail system device.

The FME model 3 can be established in a number of ways, for example using failure mode and effects analysis (FMEA).

In an embodiment, the FME model 3 further comprises a plurality of maintenance measures associated with the failure mode types 31 and the failure effects 32. In particular, each maintenance measure is associated with one or more failure mode types 31 and/or one or more failure effects 32.

**Figure 5** shows a flow diagram illustrating schematically how the FME model 3 is established, according to an embodiment of the invention. The FME model is established using a historical dataset 4 of failure mode types 31 and failure effects 32. Depending on the embodiment, the historical dataset 4 was compiled on the basis of a FMEA, in which a group of technical experts recorded, for a plurality of rail system devices, a number of failure mode types 31 and therewith associated failure effects 32. In an embodiment, at least some parts of the historical dataset 4 of the failure mode types 31 of the historical dataset 4 are established using an automated process.

In an embodiment, the statistical topic model, as described herein, is used to establish at least part of the historical dataset 4. The topic model takes as an input a large number of historical fault report messages and, using machine learning (e.g., unsupervised learning), groups these historical fault report messages into a plurality of groups, each with a common failure mode type 31. The topic model therefore automatically provides the failure mode types 31 of a particular rail system device, taking as an input only historical fault report messages associated with that particular rail system device. Further, the topic model can additionally assign each historical fault report message to a particular rail system device, such that an explicit identification of the rail system device in the historical fault report messages is not necessary to successfully employ the topic model. Additionally, depending on the embodiment, the topic model further establishes failure effects 32 by extracting, from the historical fault report messages or additional informational sources, failure effects 32 associated with each fault report message.

In addition to the historical dataset 4, the FME model 3 is also established by extracting (e.g., by using a data source crawler) technical device information 5 related to rail system devices from external sources. These external sources comprise scientific literature, patent publication, and/or technical manuals. In particular, failure mode types 31 and failure effects 32 are determined from these external sources (for further details, see the description with reference to **Figure 6** herein).

In an embodiment, the maintenance measures associated with the failure mode types 31 and/or failure effects 32 are also determined during establishing of the FME model 3. As described for the establishment of failure mode types 31 and failure effects 32 herein, the maintenance measures can be compiled by a group of experts, historical fault report messages and/or external data sources. As described above, the FME model 3 can thereby make use of natural language processing and extracting maintenance measures by the use of a statistical topic model.

After establishing the FME model 3, the model is implemented as described herein, in particular such that the processor 11 uses the FME model 3 for maintenance planning of the rail system device.

In an embodiment, the FME model 3 aggregates incoming fault report messages. Thereby, failure mode types are linked to a specific rail system device. Depending on the frequency and nature of particular failure mode types 31 relating to the specific rail system, further steps may be taken. These steps include, for example, the revision or replacement of the specific rail system device or a component thereof, with another specific rail system device of the same or similar functionality. In particular, the replacement rail system device is configured such that the particular failure mode types 31 occur less frequently. In this manner, prescriptive solutions can be identified.

**Figure 6** shows a flow diagram illustrating an exemplary sequence of steps for determining failure mode types 31 and failure effects 32 of rail system devices from external sources.

In a step S20, technical device information is aggregated from a plurality of sources, including scientific literature, patent publication, and/or technical manuals.

In a step S21, functional and/or structural elements of the rail system device are extracted from the external sources and analyzed to determine, in a step S22, one or more failure mode types 31 and one or more failure effects 32 of the rail system device. Extracting the functional elements and/or structural elements from the external sources can comprise using natural language processing, in particular classification, Named Entity Recognition (NER), and/or semantic association. The natural language processing can further comprise using a machine reading comprehension model including span extraction and free-answering.

The individual functional and/or structural components of the rail system device can each have associated failure mode types 31 and one or more failure effects 32. Further, if the functional and/or structural components can be arranged in a hierarchical model, the failure mode types 31 and the one or more therewith associated failure effects 32 can also be arranged in an analogous hierarchical model.

**Figure 7** shows a block diagram illustrating schematically a maintenance facility 2 for performing maintenance of the rail system device, in particular according to maintenance measures as indicated in a received maintenance planning message. The maintenance facility 2 comprises a workshop 20, the workshop 20 having means for maintaining the rail system device. The workshop 20 may further comprise an inventory of replacement parts for replacing the rail system device or parts thereof. The maintenance facility 2 further comprises a computing device 21 having a display 22. The computing device 21 can be, for example, a smart phone, laptop computer, or tablet computer. The maintenance facility 2 can further comprise an RFID reader configured to read an RFID tag attached to the rail system device.

**Figure 8** shows a flow diagram illustrating an exemplary sequence of method steps for maintenance of the rail system device.

In a step S30, the computing device 21 receives, from the rail system maintenance planning device 1, a maintenance request comprising the maintenance planning message. The maintenance planning message includes maintenance measures.

In a step S31, the maintenance request is displayed on the display 22 of the computing device 21. A service technician then performs maintenance of the rail system device according to the maintenance measures.

In a step S32, the maintenance is performed and a maintenance confirmation message is transmitted, from the computing device 21 to the rail system device.

**Figures 9a** and **9b** show block diagrams illustrating schematically examples of different types of rail system devices, in particular rolling stock devices and infrastructure devices. The rolling stock devices including electrical locomotives and train cars, and the infrastructure devices include the rail track system (e.g., railway track and railroad switches) and the power electrical systems (e.g., a traction substation and an overhead electrical line).

As depicted in **Figure 9a****,** the electrical locomotive comprises a pantograph, a transformer, traction power control, an electrical motor, and a wheel. An auxiliary power system powers auxiliary systems including a battery, lights HVAC, and a compressor. These auxiliary systems can be connected to further train cars attached to the electrical locomotive.

As depicted in **Figure 9b****,** the train car comprises an HVAC system, lights, an alarm system, emergency brakes, video surveillance, loudspeakers, fire protection, and door systems. The door systems comprise sliding doors, each having, for example, a plurality of sensors (e.g. an open sensor, a closed sensor, an obstacle sensor), a motor, buttons, and a sliding door step.

## Claims

1. A method for maintenance planning of a rail system device, in particular a rolling stock device or a railway infrastructure device, the method comprising:
receiving (S1), in a processor (11), a fault report message relating to a malfunctioning rail system device;
analyzing (S2), in the processor (11), the fault report message using natural language processing;
mapping (S3), in the processor (11), the analyzed fault report message to a particular failure mode type (31) of a plurality of failure mode types (31) associated with the rail system device, the particular failure mode type (31) identifying at least one probable cause of malfunction of the rail system device related to the fault report message;
determining (S4), in the processor (11), using the particular failure mode type (31), a failure effect (32) associated with the particular failure mode type (31), wherein the failure effect (32) identifies one or more operational consequences of the particular failure mode type (31); and
determining (S5), in the processor (11), one or more of: a time or a distance until maintenance of the rail system device, using the failure effect (32).

2. The method of claim 1, further comprising generating (S6), in the processor (11), a maintenance planning message indicating one or more of: the time or the distance until maintenance.

3. The method of one of claims 1 or 2, further comprising performing (S7) maintenance of the rail system device according to maintenance measures, wherein the maintenance measures are determined using one or more of: the fault report message, the failure mode type (31), or the failure effect (32).

4. The method of one of claims 1 to 3, wherein determining (S4) the failure effect (32) using the particular failure mode type (31) comprises using a failure-mode-and-effects model (3) which associates the particular failure mode type (31) with the failure effect (32).

5. The method of claim 4, wherein the failure-mode-and-effects model (3) for the rail system device is established using one or more of: a historical dataset (4) comprising the plurality of failure mode types (31) of the rail system device and therewith associated failure effects (32), or by processing technical device information (5) related to the rail system device from external information sources.

6. The method of claim 5, wherein processing the technical device information (5) from external information sources comprises:
aggregating (S20), in the processor (11), from a plurality of external information sources, the technical device information (5) related to the rail system device, wherein the external information sources include one or more of: scientific literature, patent publications, or technical manuals,
extracting (S21), in the processor (11), from the plurality of external information sources, functional elements and/or structural elements of the rail system device, and
determining (S22), in the processor (11), using the functional elements and/or structural elements, one or more failure mode types (31) and one or more failure effects (32) of the rail system device.

7. The method of one of claims 1 to 6, wherein mapping (S3) the analyzed fault report message to one of a plurality of failure mode types (31) uses a statistical topic model trained using a topic model training dataset and an unsupervised machine learning technique, wherein the topic model training dataset comprises a plurality of historical fault report messages.

8. The method of one of claims 1 to 7, wherein the natural language processing for analyzing (S2) the fault report message uses Named Entity Recognition.

9. A rail system maintenance planning device (1) for maintenance planning of a rail system device, in particular a rolling stock device or a railway infrastructure device, comprising a processor (11) configured to:
receive (S1) a fault report message relating to a malfunctioning rail system device;
analyze (S2) the fault report message using natural language processing;
map (S3) the analyzed fault report message to a particular failure mode type (31) of a plurality of failure mode types (31) associated with the rail system device, the particular failure mode type (31) identifying at least one probable cause of malfunction of the rail system device related to the fault report message;
determine (S4), using the particular failure mode type (31), a failure effect (32) associated with the particular failure mode type (31), using the particular failure mode types, wherein the failure effect (32) identifies one or more operational consequences of the particular failure mode type (31); and
determine (S5) one or more of: a time or a distance until maintenance of the rail system device, using the failure effect (32).

10. The rail system maintenance planning device (1) of claim 9, wherein the processor (11) is further configured to generate (S6) a maintenance planning message indicating one or more of: the time or the distance until maintenance.

11. The rail system maintenance planning device (1) of one of claims 9 or 10, wherein the processor (11) is configured to determine (S4) the failure effect (32) using a failure-mode-and-effects model (3) which associates the particular failure mode type (31) with the failure effect (32).

12. The rail system maintenance planning device (1) of claim 11, wherein the failure-mode-and-effects model (3) for the rail system device is established using one or more of: a historical dataset (4) comprising the plurality of failure mode types (31) of the rail system device and therewith associated failure effects (32), or by processing technical device information (5) related to the rail system device from external information sources.

13. The rail system maintenance planning device (1) of claim 12, wherein the processor (11) is configured to process the technical device information (5) from external information sources by:
aggregating (S20), from a plurality of external information sources, the technical device information (5) related to the rail system device, wherein the external information sources include one or more of: scientific literature, patent publications, or technical manuals,
extracting (S21), from the plurality of external information sources, functional elements and/or structural elements of the rail system device, and
determining (S22), using the functional elements and/or structural elements, one or more failure mode types (31) and one or more failure effects (32) of the rail system device.

14. The rail system maintenance planning device (1) of one of claims 9 to 13, wherein the processor (11) is configured to map (S3) the analyzed fault report message to one of a plurality of failure mode types (31) using a statistical topic model trained using a topic model training dataset and an unsupervised machine learning technique, wherein the topic model training dataset comprises a plurality of historical fault report messages.

15. A non-transitory computer-readable medium having stored thereon computer program code configured to control a processor (11) of a rail system maintenance planning device (1) such that the processor (11) performs the following steps of:
receiving (S1) a fault report message relating to a malfunctioning rail system device;
analyzing (S2) the fault report message using natural language processing;
mapping (S3) the analyzed fault report message to a particular failure mode type (31) of a plurality of failure mode types (32) associated with the rail system device, the particular failure mode type (31) identifying at least one probable cause of malfunction of the rail system device related to the fault report message;
determining (S4), using the particular failure mode type (31), a failure effect (32) associated with the particular failure mode type (31), wherein the failure effect (32) identifies one or more operational consequences of the particular failure mode type (31); and
determining (S5) one or more of: a time or a distance until maintenance of the rail system device, using the failure effect (32).

## Patentansprüche

1. Ein Verfahren zur Wartungsplanung einer Schienensystemvorrichtung, insbesondere einer Schienenfahrzeugvorrichtung oder einer Eisenbahninfrastrukturvorrichtung, wobei das Verfahren Folgendes umfasst:
Empfangen (S1) einer Fehlermeldungsnachricht in einem Prozessor (11), die eine fehlfunktionierende Schienensystemvorrichtung betrifft;
Analysieren (S2) der Fehlermeldungsnachricht unter Verwendung natürlicher Sprachverarbeitung im Prozessor (11);
Abbilden (S3) der analysierten Fehlermeldungsnachricht zu einem bestimmten Fehlermodustyp (31) aus einer Vielzahl von Fehlermodustypen (31), die auf der Schienensystemvorrichtung zugeordnet sind, wobei der bestimmte Fehlermodustyp (31) mindestens eine wahrscheinliche Ursache für eine Fehlfunktion der Schienensystemvorrichtung betrifft, die die Fehlermeldungsnachricht betrifft;
Bestimmen (S4) im Prozessor (11), unter Verwendung des bestimmten Fehlermodustyps (31) eines Fehlereffekts (32), der auf den bestimmten Fehlermodustyp (31) zugeordnet ist, wobei der Fehlereffekt (32) eine oder mehrere Betriebsfolgen des bestimmten Fehlermodustyps (31) identifiziert; und
Bestimmen (S5) im Prozessor (11), einer oder mehrerer der folgenden Grössen: Zeit oder Entfernung bis zur Wartung der Schienensystemvorrichtung unter Verwendung des Fehlereffekts (32).

2. Das Verfahren nach Anspruch 1, ferner umfassend das Erzeugen (S6) einer Wartungsplanungsnachricht in dem Prozessor (11), die eine oder mehrere der folgenden Angaben enthält: die Zeit oder die Entfernung bis zur Wartung.

3. Das Verfahren nach einem der Ansprüche 1 oder 2, ferner umfassend das Durchführen (S7) einer Wartung der Schienensystemvorrichtung gemäss Wartungsmassnahmen, wobei die Wartungsmassnahmen unter Verwendung einer oder mehrerer der folgenden bestimmt werden: der Fehlermeldungsnachricht, des Fehlermodustyps (31) oder der Fehlereffekt (32).

4. Das Verfahren nach einem der Ansprüche 1 bis 3, wobei das Bestimmen (S4) des Fehlereffekts (32) unter Verwendung des bestimmten Fehlermodustyps (31) das Verwenden eines Fehlermodus- und -effektmodells (3) umfasst, das den bestimmten Fehlermodustyp (31) mit dem Fehlereffekt (32) zuordnet.

5. Das Verfahren nach Anspruch 4, wobei das Fehlermodus- und -effektmodell (3) für die Schienensystemvorrichtung unter Verwendung eines oder mehrerer der Folgenden erstellt wird: eines historischen Datensatzes (4), umfassend die Vielzahl von Fehlermodustypen (31) der Schienensystemvorrichtung und damit zugeordnete Fehlereffekte (32), oder durch Verarbeiten technischer Vorrichtungsinformationen (5), die die Schienensystemvorrichtung betreffen, aus externen Informationsquellen.

6. Das Verfahren nach Anspruch 5, wobei die Verarbeitung der technischen Vorrichtungsinformationen (5) von externen Informationsquellen Folgendes umfasst:
Aggregieren (S20) der technischen Vorrichtungsinformationen (5), die die Schienensystemvorrichtung betreffen, in dem Prozessor (11) aus einer Vielzahl von externen Informationsquellen, wobei die externen Informationsquellen eine oder mehrere der Folgenden umfassen: wissenschaftliche Literatur, Patentveröffentlichungen oder technische Handbücher,
Extrahieren (S21) in dem Prozessor (11) von Funktionselementen und/oder Strukturelementen der Schienensystemvorrichtung aus der Vielzahl externer Informationsquellen und
Bestimmen (S22) in dem Prozessor (11) unter Verwendung der Funktionselemente und/oder Strukturelemente eines oder mehrerer Fehlermodustypen (31) und eines oder mehrerer Fehlereffekte (32) der Schienensystemvorrichtung.

7. Verfahren nach einem der Ansprüche 1 bis 6, wobei das Abbilden (S3) der analysierten Fehlermeldungsnachricht zu einem von mehreren Fehlermodustypen (31) ein statistisches Themenmodell verwendet, das unter Verwendung eines Themenmodell-Trainingsdatensatzes und einer Technik des unüberwachten maschinellen Lernens trainiert wird, wobei der Themenmodell-Trainingsdatensatz mehrere historische Fehlermeldungsnachrichten umfasst.

8. Das Verfahren nach einem der Ansprüche 1 bis 7, wobei die natürliche Sprachverarbeitung zum Analysieren (S2) der Fehlermeldungsnachricht die Erkennung benannter Entitäten verwendet.

9. Eine Wartungsplanungsvorrichtung (1) für ein Schienensystem zur Wartungsplanung einer Schienensystemvorrichtung, insbesondere einer Schienenfahrzeugvorrichtung oder einer Eisenbahninfrastrukturvorrichtung, umfassend einen Prozessor (11), der eingerichtet ist, um:
eine Fehlermeldungsnachricht in Bezug auf eine fehlfunktionierende Schienensystemvorrichtung zu empfangen (S1);
die Fehlermeldungsnachricht unter Verwendung natürlicher Sprachverarbeitung zu analysieren (S2);
die analysierte Fehlermeldungsnachricht auf einen bestimmten Fehlermodustyp (31) aus einer Vielzahl von Fehlermodustypen (31) abzubilden, die der Schienensystemvorrichtung zugeordnet sind, wobei der bestimmte Fehlermodustyp (31) mindestens eine wahrscheinliche Ursache für eine Fehlfunktion der Schienensystemvorrichtung identifiziert, die der Fehlermeldungsnachricht zugeordnet ist;
unter Verwendung des bestimmten Fehlermodustyps (31) einen Fehlereffekt (32) zu bestimmen (S4), der auf den bestimmten Fehlermodustyp (31) zugeordnet wird, unter Verwendung der bestimmten Fehlermodustypen, wobei der Fehlereffekt (32) eine oder mehrere Betriebsfolgen des bestimmten Fehlermodustyps (31) identifiziert; und
einer oder mehrerer der folgenden Grössen zu bestimmen (S5): einer Zeit oder einer Entfernung bis zur Wartung der Schienensystemvorrichtung unter Verwendung des Fehlereffekts (32).

10. Die Wartungsplanungsvorrichtung (1) für ein Schienensystem nach Anspruch 9, wobei der Prozessor (11) ferner eingerichtet ist, eine Wartungsplanungsnachricht zu erzeugen (S6), die eine oder mehrere der folgenden enthält: die Zeit oder die Entfernung bis zur Wartung.

11. Die Wartungsplanungsvorrichtung (1) für ein Schienensystem nach einem der Ansprüche 9 oder 10, wobei der Prozessor (11) eingerichtet ist, den Fehlereffekt (32) unter Verwendung eines Fehlermodus- und Fehlereffektmodells (3) zu bestimmen (S4), das den jeweiligen Fehlermodustyp (31) auf den Fehlereffekt (32) zuordnet.

12. Die Wartungsplanungsvorrichtung (1) für ein Schienensystem nach Anspruch 11, wobei das Fehlermodus- und -effektmodell (3) für die Schienensystemvorrichtung unter Verwendung eines oder mehrerer der folgenden erstellt wird: eines historischen Datensatzes (4), umfassend die Vielzahl von Fehlermodustypen (31) der Schienensystemvorrichtung und damit zugeordnete Fehlereffekte (32), oder durch Verarbeiten technischer Vorrichtungsinformationen (5), die die Schienensystemvorrichtung betreffen, aus externen Informationsquellen.

13. Die Wartungsplanungsvorrichtung (1) für ein Schienensystem nach Anspruch 12, wobei der Prozessor (11) eingerichtet ist, die technischen Vorrichtungsinformationen (5) von externen Informationsquellen zu verarbeiten, indem:
die technischen Vorrichtungsinformationen (5), die die Schienensystemvorrichtung betreffen, von mehreren externen Informationsquellen aggregiert werden (S20), wobei die externen Informationsquellen eine oder mehrere der folgenden umfassen: wissenschaftliche Literatur, Patentveröffentlichungen oder technische Handbücher,
aus den mehreren externen Informationsquellen, Funktionselemente und/oder Strukturelemente der Schienensystemvorrichtung extrahiert werden (S21) und
unter Verwendung der Funktionselemente und/oder Strukturelemente einen oder mehrere Fehlermodustypen (31) und einen oder mehrere Fehlereffekte (32) der Schienensystemvorrichtung bestimmt werden (S22).

14. Die Wartungsplanungsvorrichtung (1) für ein Schienensystem nach einem der Ansprüche 9 bis 13, wobei der Prozessor (11) eingerichtet ist, die analysierte Fehlermeldungsnachricht unter Verwendung eines statistischen Themenmodells, das unter Verwendung eines Themenmodell-Trainingsdatensatzes und einer Technik des unüberwachten maschinellen Lernens trainiert wurde, auf einen von mehreren Fehlermodustypen (31) abzubilden (S3), wobei der Themenmodell-Trainingsdatensatz mehrere historische Fehlermeldungsnachrichten umfasst.

15. Ein nichttransitorisches computerlesbares Medium, auf dem ein Computerprogrammcode gespeichert ist, der zur Steuerung eines Prozessors (11) einer Vorrichtung zur Wartungsplanung eines Schienensystems (1) eingerichtet ist, so dass der Prozessor (11) die folgenden Schritte ausführt:
Empfangen (S1) einer Fehlermeldungsnachricht, die sich auf eine fehlfunktionierende Schienensystemvorrichtung bezieht;
Analysieren (S2) der Fehlermeldungsnachricht unter Verwendung natürlicher Sprachverarbeitung;
Abbilden (S3) der analysierten Fehlermeldungsnachricht zu einem bestimmten Fehlermodustyp (31) aus einer Vielzahl von Fehlermodustypen (32), die auf der Schienensystemvorrichtung zugeordnet sind, wobei der bestimmte Fehlermodustyp (31) mindestens eine wahrscheinliche Ursache für eine Fehlfunktion der Schienensystemvorrichtung identifiziert, die der Fehlermeldungsnachricht zugeordnet ist;
Bestimmen (S4) eines Fehlereffekts (32), der mit dem bestimmten Fehlermodustyp (31) zugeordnet ist, unter Verwendung des bestimmten Fehlermodustyps (31), wobei der Fehlereffekt (32) eine oder mehrere Betriebsfolgen des bestimmten Fehlermodustyps (31) identifiziert; und
Bestimmen (S5) einer oder mehrerer der folgenden Grössen: einer Zeit oder einer Entfernung bis zur Wartung der Schienensystemvorrichtung unter Verwendung des Fehlereffekts (32).

## Revendications

1. Procédé de planification de la maintenance d'un dispositif du système ferroviaire, en particulier d'un dispositif de matériel roulant ou d'un dispositif d'infrastructure ferroviaire, comprenant:
recevoir (S1), dans un processeur (11), un message de rapport de défaillance relatif à un dysfonctionnement d'un dispositif du système ferroviaire;
analyser (S2), dans le processeur (11), le message de rapport de défaillance à l'aide d'un traitement du langage naturel;
mettre en correspondance (S3), dans le processeur (11), le message de rapport de défaut analysé avec un type de mode de défaillance particulier (31) d'une pluralité de types de mode de défaillance (31) associés au dispositif ferroviaire, le type de mode de défaillance particulier (31) identifiant au moins une cause probable de dysfonctionnement du dispositif ferroviaire liée au message de rapport de défaillance;
déterminer (S4), dans le processeur (11), en utilisant le type de mode de défaillance particulier (31), un effet de défaillance (32) associé au type de mode de défaillance particulier (31), dans lequel l'effet de défaillance (32) identifie une ou plusieurs conséquences opérationnelles du type de mode de défaillance particulier (31); et déterminer (S5), dans le processeur (11), un ou plusieurs éléments parmi : un temps ou une distance jusqu'à la maintenance du dispositif du système ferroviaire, en utilisant l'effet de défaillance (32).

2. Le procédé selon la revendication 1, comprenant en outre la génération (S6), dans le processeur (11), d'un message de planification d'entretien indiquant un ou plusieurs des éléments suivants : le temps ou la distance jusqu'à l'entretien.

3. Le procédé de l'une des revendications 1 ou 2, comprenant en outre l'exécution (S7) de la maintenance du dispositif du système ferroviaire selon des mesures de maintenance, selon lesquelles les mesures de maintenance sont déterminées à l'aide d'un ou plusieurs des éléments suivants : le message de rapport de défaillance, le type de mode de défaillance (31), ou l'effet de défaillance (32).

4. Le procédé de l'une des revendications 1 à 3, dans lequel déterminer (S4) l'effet de défaillance (32) à l'aide du type de mode de défaillance particulier (31) comprend l'utilisation d'un modèle de mode de défaillance et modèle d'effets de défaillance (3) qui associe le type de mode de défaillance particulier (31) à l'effet de défaillance (32).

5. Procédé selon la revendication 4, dans lequel le modèle de mode de défaillance et modèle d'effets de défaillance (3) pour le dispositif ferroviaire est établi en utilisant un ou plusieurs des éléments suivants : un ensemble de données historiques (4) comprenant la pluralité de types de mode de défaillance (31) du dispositif ferroviaire et les effets de défaillance (32) associés, ou en traitant les informations techniques du dispositif (5) relatives au dispositif ferroviaire à partir de sources d'informations externes.

6. Procédé selon la revendication 5, dans lequel le traitement des informations (5) relatives au dispositif technique à partir de sources d'informations externes comprend:
l'agrégation (S20), dans le processeur (11), à partir d'une pluralité de sources d'informations externes, des informations de dispositif technique (5) relatives au dispositif du système ferroviaire, dans laquelle les sources d'informations externes comprennent un ou plusieurs des éléments suivants : littérature scientifique, publications de brevets, ou manuels techniques,
extraire (S21), dans le processeur (11), à partir de la pluralité de sources d'informations externes, des éléments fonctionnels et/ou des éléments structurels du dispositif du système ferroviaire, et
déterminer (S22), dans le processeur (11), à l'aide des éléments fonctionnels et/ou des éléments structurels, un ou plusieurs types de mode de défaillance (31) et un ou plusieurs effets de défaillance (32) du dispositif système ferroviaire.

7. Le procédé de l'une des revendications 1 à 6, dans lequel la mise en correspondance (S3) du message de rapport de défaillance analysé avec l'un d'une pluralité de types de mode de défaillance (31) utilise un modèle thématique statistique entraîné à l'aide d'un ensemble de données d'entraînement de modèle thématique et d'une technique d'apprentissage automatique non supervisé, dans lequel l'ensemble de données d'entraînement de modèle thématique comprend une pluralité de messages de rapport de défaillance historiques.

8. Le procédé selon l'une des revendications 1 à 7, dans lequel le traitement du langage naturel pour analyser (S2) le message de rapport de défaillance utilise la reconnaissance d'entités nommées.

9. Un dispositif (1) de planification de la maintenance d'un dispositif du système ferroviaire, notamment un dispositif de matériel roulant ou un dispositif d'infrastructure ferroviaire, comprend un processeur (11) configuré pour:
recevoir (S1) un message de rapport de défaillance relatif à un dysfonctionnement d'un dispositif du système ferroviaire;
analyser (S2) le message de rapport de défaillance à l'aide d'un traitement du langage naturel;
mettre en correspondance (S3) le message de rapport de défaillance analysé avec un type de mode de défaillance particulier (31) d'une pluralité de types de mode de défaillance (31) associés au dispositif de système ferroviaire, le type de mode de défaillance particulier (31) identifiant au moins une cause probable de dysfonctionnement du dispositif de système ferroviaire liée au message de rapport de défaillance;
déterminer (S4), à l'aide du type de mode de défaillance particulier (31), un effet de défaillance (32) associé au type de mode de défaillance particulier (31), à l'aide des types de mode de défaillance particuliers, dans lequel l'effet de défaillance (32) identifie une ou
plusieurs conséquences opérationnelles du type de mode de défaillance particulier (31) ; et
déterminer (S5) un ou plusieurs éléments parmi : un temps ou une distance jusqu'à la maintenance du dispositif du système ferroviaire, à l'aide de l'effet de défaillance (32).

10. Le dispositif (1) de planification de la maintenance d'un dispositif du système ferroviaire de la revendication 9, dans lequel le processeur (11) est en outre configuré pour générer (S6) un message de planification de la maintenance indiquant un ou plusieurs des éléments suivants : le temps ou la distance jusqu'à la maintenance.

11. Le dispositif (1) de planification de la maintenance d'un dispositif du système ferroviaire de l'une des revendications 9 ou 10, dans lequel le processeur (11) est configuré pour déterminer (S4) l'effet de défaillance (32) à l'aide d'un modèle de mode de défaillance et modèle d'effets de défaillance (3) qui associe le type de mode de défaillance particulier (31) à l'effet de défaillance (32)

12. Le dispositif (1) de planification de la maintenance d'un dispositif du système ferroviaire de la revendication 11, dans lequel le modèle de mode de défaillance et modèle d'effets de défaillance (3) pour le dispositif du système ferroviaire est établi en utilisant un ou plusieurs des éléments suivants : un ensemble de données historiques (4) comprenant la pluralité de types de mode de défaillance (31) du dispositif du système ferroviaire et les effets de défaillance associés (32), ou en traitant les informations techniques du dispositif (5) relatives au dispositif du système ferroviaire à partir de sources d'informations externes.

13. Le dispositif (1) de planification de la maintenance d'un dispositif du système ferroviaire selon la revendication 12, dans lequel le processeur (11) est configuré pour traiter les informations (5) relatives au dispositif technique provenant de sources d'informations externes en:
agrégeant (S20), à partir d'une pluralité de sources d'informations externes, les informations de dispositif technique (5) relatives au dispositif du système ferroviaire, dans laquelle les sources d'informations externes comprennent un ou plusieurs des éléments suivants : littérature scientifique, publications de brevets, ou manuels techniques,
extraire (S21), à partir de la pluralité de sources d'informations externes, des éléments fonctionnels et/ou des éléments structurels du dispositif du système ferroviaire, et
déterminer (S22), à l'aide des éléments fonctionnels et/ou des éléments structurels, un ou plusieurs types de mode de défaillance (31) et un ou plusieurs effets de défaillance (32) du dispositif système ferroviaire.

14. Le dispositif (1) de planification de la maintenance d'un dispositif du système ferroviaire de l'une des revendications 9 à 13, dans lequel le processeur (11) est configuré pour mettre en correspondance (S3) le message de rapport de défaillance analysé avec l'un d'une pluralité de types de mode de défaillance (31) à l'aide d'un modèle thématique statistique entraîné à l'aide d'un ensemble de données d'entraînement de modèle thématique et d'une technique d'apprentissage automatique non supervisé, dans lequel l'ensemble de données d'entraînement de modèle thématique comprend une pluralité de messages de rapport de défaillance historiques.

15. Support lisible par ordinateur non transitoire sur lequel est stocké un code de programme d'ordinateur configuré pour commander un processeur (11) d'un dispositif (1) de planification de la maintenance d'un système ferroviaire, de sorte que le processeur (11) exécute les étapes suivantes consistant à:
recevoir (S1) un message de rapport de défaillance relatif à un dysfonctionnement d'un dispositif du système ferroviaire;
analyser (S2) le message de rapport de défaillance à l'aide d'un traitement du langage naturel;
mettre en correspondance (S3) le message de rapport de défaillance analysé avec un type de mode de défaillance particulier (31) d'une pluralité de types de mode de défaillance (32) associés au dispositif de système ferroviaire, le type de mode de défaillance particulier (31) identifiant au moins une cause probable de dysfonctionnement du dispositif de système ferroviaire liée au message de rapport de défaillance;
déterminer (S4), à l'aide du type de mode de défaillance particulier (31), un effet de défaillance (32) associé au type de mode de défaillance particulier (31), dans lequel l'effet de défaillance (32) identifie une ou plusieurs conséquences opérationnelles du type de mode de défaillance particulier (31) ; et
déterminer (S5) un ou plusieurs éléments parmi : un temps ou une distance jusqu'à la maintenance du dispositif du système ferroviaire, à l'aide de l'effet de défaillance (32).
